# EUROPÄISCHE PATENTSCHRIFT

(11) **EP 0 610 789 B1**
(45) Veröffentlichungstag und Bekanntmachung des Hinweises auf die Patenterteilung: **21.03.2001**
(21) Anmeldenummer: 94101524.0
(22) Anmeldetag: 02.02.1994
(51) Int. Cl.: B30B 11/20, B30B 11/22, A23N 17/00

(54) **Vorrichtung zur Eliminierung von Bakterien und Keimen**
Device to eliminate bacterias and germs
Dispositif pour éliminer les bactéries et les germes

(30) Priorität: 10.02.1993 CH 40093
(43) Veröffentlichungstag der Anmeldung: 17.08.1994
(73) Patentinhaber: BUEHLER AG, 9240 Uzwil (CH)
(72) Erfinder: Wetzel, Willi, CH-9240 Uzwil (CH)

(56) Entgegenhaltungen:
- WO-A-93/06742
- DE-A- 2 002 638
- DE-A- 2 830 043
- FR-A- 2 276 165
- GB-A- 1 106 445
- GB-A- 2 181 988
- US-A- 4 161 139
- PATENT ABSTRACTS OF JAPAN vol. 11, no. 273 (C-445)4. September 1987 & JP-A-62 074 273 (SUGANO KATSUMI) 6. April 1987

## Beschreibung

Die Erfindung betrifft ein Verfahren gemäß dem Oberbegriff des Anspruchs 1 und eine Vorrichtung gemäss Oberbegriff des Anspruchs 6 bzw. 12.

Die futtermittelherstellende Industrie und deren Zulieferindustrie stellen Fertigprodukte in an sich bekannter Weise aus einer Mehrzahl von Rohprodukten in verschiedenen, den zu ernährenden Tierarten angepassten Formen her, beispielsweise in Form von sogenannten Würfeln auch Pellets genannt.

In Folge der Vielfalt der vorgenannten Rohprodukte, welche auch tierische Rohprodukte enthalten, besteht die Gefahr der Annahme kontaminierter Rohprodukte und in der Produktion, d.h. zwischen Annahme der Rohprodukte und Verlad der Fertigprodukte besteht ebenfalls die Möglichkeit der Kontamination durch Bakterien, Keime und Salmonellen, wobei die letzteren besonders nachteilig sind.

Solche Kontaminationen sind deshalb gefährlich, weil beispielsweise Bakterien, insbesondere Salmonellen, ohne besondere Massnahmen zu deren Vernichtung, im Rahmen der Fleischverwertung für die Ernährung an die Fleischkonsumenten übertragen werden können.

Anderseits ist es an sich bekannt, dass es während der Annahme und der Lagerung der genannten Rohprodukte, für das Vermindern oder Vermeiden dieser Kontamination aus verschiedenen Gründen schwierig ist, etwas zu unternehmen.

Aus dem Stand der Technik ist eine GB-1 106 445 bekannt, welche zwecks Erwärmung der Konditionierschnecken, welche die der nachfolgenden Pelletierpresse abgegebene Produkt vorbereitet, mit einem Heizmantel versehen, welcher mittels Dampf beheizt wird.

Zu diesem Zweck weist der Heizmantel am unteren Teil einen Dampfeinlass und am oberen Teil einen Dampfauslass auf.

Der Zweck dieses Heizmantels besteht darin, den Inhalt der Konditionierschnecken derart zu erwärmen, dass Keime von Bakterien, wie beispielsweise Salmonellen, inaktiv gemacht werden können.

Der Nachteil einer solchen Vorrichtung besteht in der Verwendung von Dampf, in dem die Steuerung bzw. Regelung der Temperatur des zu erwärmenden Produktes mittels Dampf umständlich und schwierig zu regeln ist, insbesondere wenn die Erwärmung nicht über die ganze Länge der Vorbereitungselemente (beispielsweise Mischer und Konditionierschnecken) gleichmässig erfolgen soll.

So war es Aufgabe der Erfindung, in einer geeigneten Funktionsstelle durch Errichtung einer Hitzebarriere in der Produktion die Kontamination erfolgreich so zu bekämpfen, dass anschliessend im wesentlichen keine Gefahr besteht, dass das Fertigprodukt erneut durch die genannte Kontamination verunreinigt werden kann.

Die Erfindung löst die Aufgabe durch die im Kennzeichen der Ansprüchen 1, 6 bzw. 12 aufgeführten Merkmale. Weitere vorteilhafte Ausführungsformen sind in den weiteren abhängigen Ansprüchen aufgeführt.

Ein Vorteil der Erfindung besteht darin, dass das Produkt nach der Behandlung in geschlossenen Wegen sauber geführt und nur für kurze Zeit vor dem Verlad silotiert wird, so dass für das Produkt wenig bis keine Möglichkeit besteht, erneut kontaminiert zu werden.

Ein weiterer Vorteil der Erfindung besteht darin, dass das Produkt vor, in der Würfelpress- und/oder Expanderanlage derart erwärmt werden kann, dass das Produkt während einer genügend langen Dauer einer genügend hohen Temperatur ausgesetzt wird, um mit grosser Wahrscheinlichkeit zu garantieren, dass die genannte Kontamination inaktiviert wird.

Ein weiterer Vorteil besteht ebenfalls darin, dass die Erwärmung auch noch in den Bereich des fertigen Produktes ausgedehnt werden kann, so dass an den Wänden der Produktverarbeitungselemente bis hin zum Kühler keine Kondensation stattfinden kann, welche zum Kleben der Feinteile an den Wänden dieser Elemente führen kann.

Ebenso ist es vorteilhaft, dass die Erfindung als Zusatzteil einer bestehenden Produktionsmaschine vorgesehen werden kann, was einerseits raumsparend und anderseits auch jederzeit nachlieferbar, d.h. nachrüstbar ist.

Die Erfindung wird anhand von Beispielen mit Hilfe der Figuren näher erläutert.

Es zeigt:
- Fig. 1: eine perspektivische Ansicht einer Würfelpresse mit den zugehörigen sich darüber befindlichen Aggregaten
- Fig. 2: eine Seitenansicht der Würfelpresse von Fig. 1, in Blickrichtung I (Fig. 1) verkleinert und halbschematisch sowie zusätzlich mit einem Steuerschema dargestellt
- Fig. 2a: Variante eines Details der Fig. 2
- Fig. 3: eine Variante von Fig. 2 vergrössert und ohne Steuerschema dargestellt
- Fig. 4: eine weitere Variante von Fig. 2
- Fig. 5, 6: je eine erfindungsgemässe Variante
- Fig. 7: eine Variante der Vorrichtung von Fig. 1.

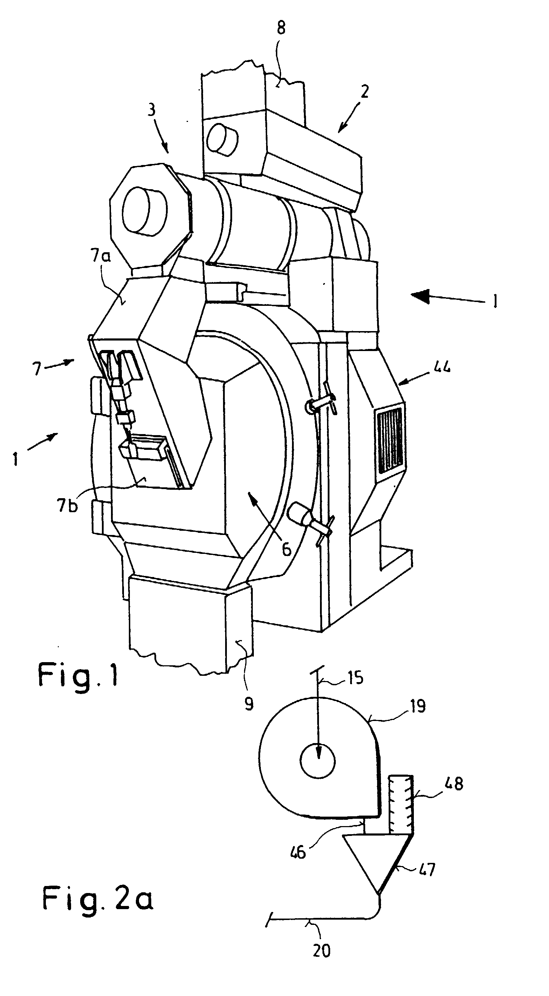

Die Fig. 1 zeigt eine Würfelpresse 1 von aussen und im geschlossenen betriebsbereiten Zustand gesehen.

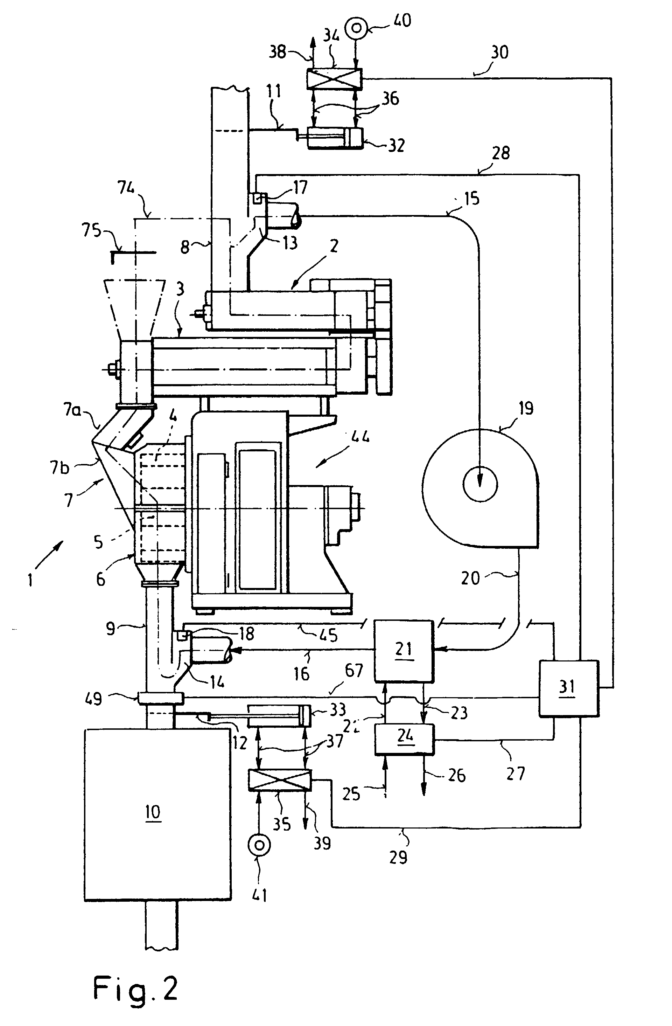

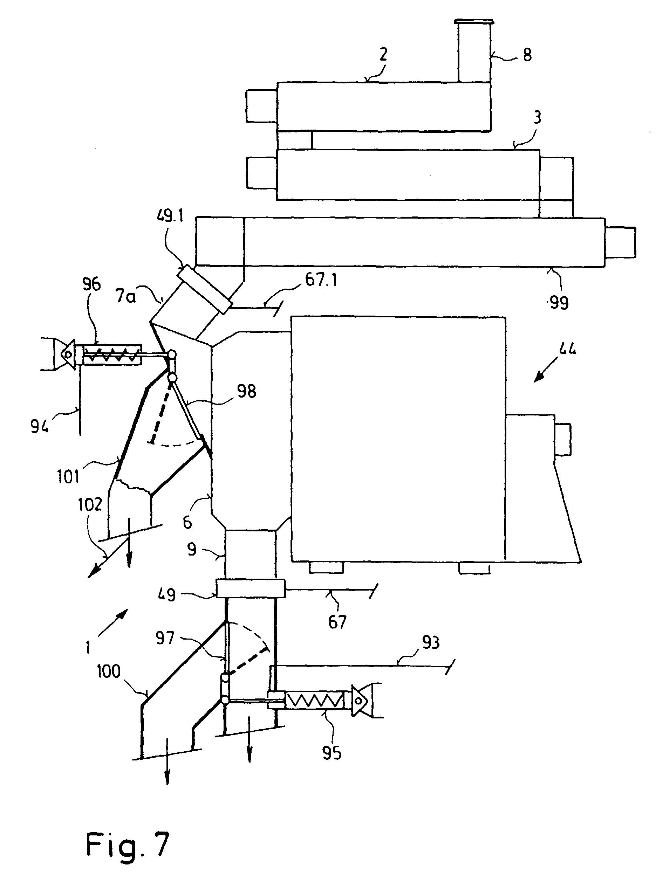

Diese Figur zeigt weiter ein Speiseaggregat 2, welches ein zu dosierendes Produkt über den Produktzufuhrkanal 8 zugeführt erhält und dieses Produkt in ein Mischaggregat 3 oder einen Expander 99 (Fig. 7) einspeist, der das gemischte Produkt über einen in einen oberen Teil 7a und einen unteren Teil 7b unterteilten Produkteinlaufkanal 7, in an sich bekannter Weise auf die Innenfläche einer Pressform 4 (siehe Fig. 2, 5 und 6) abgibt, um mittels Pressrollen 5 (Fig. 2, 5 und 6) das mehlige Produkt zu Würfeln oder auch Pellets genannt, zu pressen und diese, nachdem sie in an sich bekannter Weise von einem Messer (nicht gezeigt) an der äusseren Ringfläche der Form 4 abgeschnitten wurden, über einen Produktausgangskanal 9 der nächsten Operation zuzuführen.

Diese nächste Operation ist in der Regel, wie in Fig. 2 gezeigt, das Kühlen der Würfel in einem Kühler 10.

Mit 44 ist ein Pressenständer gekennzeichnet, in welchem - in an sich bekannter Weise - die Pressform 4 drehbar gelagert wird. Die Pressform 4 wird durch einen Motor angetrieben (nicht dargestellt).

Die Fig. 2 zeigt eine Seitenansicht in Richtung I der Würfelpresse der Fig. 1 sowie halbschematisch geschnitten dargestellt, den Produktezufuhrkanal 8 sowie den Produktausgangskanal 9 und den Kühler 10.

Mit Hilfe der Fig. 2 ist derjenige Verfahrenschritt erklärt, mittels welchem erwärmte Luft verwendet wird, um im Rahmen eines Umluftsystems die erwärmte Luft durch den Produktausgangskanal 9, ein Gehäuse 6, anschliessend durch den Produkteeinlaufkanal 7, durch den Mischapparat 3 und den Speiseapparat 2 und Produktzufuhrkanal 8 zu führen, um die mittlerweile kühlere Luft über einen Luftaustrittskanal 13 einem oberen Luftanschluss 15 zuzuführen, welcher mit einem gegen Abkühlung isolierten Ventilator 19 verbunden ist.

Der Luftkreis wird geschlossen durch eine dem Ventilator nachfolgende Verbindungsleitung 20, welche ihrerseits an einen Lufterhitzer 21 angeschlossen ist, der an seiner Austrittsseite mittels eines unteren Luftanschlusses 16 mit einem Lufteintrittskanal 14 verbunden ist, der in den Produktausgangskanal 9 mündet.

Der Lufterhitzer 21 wird über einen Einlauf 22 mit einem Heizmedium beschickt, welches am Auslauf 23 den Lufterhitzer 21 wieder verlässt.

Um das Heizmedium im Lufterhitzer 21 zu steuern, ist der Einlauf 22 sowie der Auslauf 23 mit einem Steuerventil 24 verbunden, welches das Heizmedium über eine Zufuhrleitung 25 erhält und über eine Abgangsleitung 26, das vom Lufterhitzer 21 her stammende Heizmedium wieder in eine Wärmequelle für das Heizmedium zurückzuführen, dabei ist die Wärmequelle der Einfachheit halber hier nicht dargestellt.

Zur Steuerung des Steuerventils 24 ist dieses über eine Steuerleitung 27 mit einer Steuerung 31 verbunden, welche einerseits die Eingangstemperatur der erwärmten Luft mittels eines im Lufteintrittskanal 14 vorgesehenen unteren Temperaturfühlers 18 und die Ausgangstemperatur der mittlerweile etwas abgekühlten Luft mittels eines im Luftaustrittskanal 13 vorgesehenen oberen Temperaturfühlers 17 erfasst und die Temperatur entsprechend der Abweichung gegenüber einer vorgegebenen Temperaturdifferenz mittels des Steuerventiles 24 korrigiert. Im Produktzufuhrkanal 8 ist ein Einlaufschieber 11 und im Produktausgangskanal 9 ein Auslaufschieber 12 vorgesehen. Diese Schieber sind selbstverständlich während des Betriebes, d.h. während der Produktion geöffnet, können aber bei Verwendung des Umluftsystemes zwecks Erwärmung der genannten Elemente während eines Produktunterbruches, beispielsweise eines Wochenendes, geschlossen werden. Zu diesem Zweck ist der Einlaufschieber 11 mit einer doppelt wirkenden Zylinder-Kolben-Einheit 32 verbunden, welche über Verbindungsleitungen 36 durch ein Umschaltventil 34 gesteuert wird, das mittels einer Steurleitung 30 mit der Steuerung 31 verbunden ist. Die Abluft des Ventiles 34 ist mit 38 und die Druckluftzufuhr mit 40 gekennzeichnet.

Der Auslaufschieber 12 seinerseits ist einerseits mit einer doppelt wirkenden Zylinder-Kolben-Einheit 33 verbunden, welche steuerungsmässig in analoger Weise zum Vorgenannten mittels Verbindungsleitungen 37 mit einem Umschaltventil 35 verbunden ist, das eine Steuerleitung 29 zur Steuerung 31 aufweist. Die Abluft des Steuerventiles 35 ist mit 39 und die Druckluftzufuhr mit 41 gekennzeichnet.

Im Produktausgangskanal 9 ist im weiteren ein Messelement 49 für die Produkttemperatur vorgesehen, welches mittels einer Steuerleitung 67 mit der Steuerung 31 verbunden ist. Dieses Messelement kann irgendein im Handel erhältliches Messelement sein, beispielsweise ein kontaktloses infrarotempfindliches Messelement. Die Verwendung und Funktion dieses Messelementes ist eine zusätzliche Variante zur bereits beschriebenen Steuerung, indem das Signal dieses Messelementes den Temperatursignalen 28 bzw. 45 der Temperaturfühler 17 und 18 überlagert wird, um die Lufttemperatur auf einen Wert zu bringen, welcher innerhalb eines Toleranzbereiches für eine vorgegebene Produkttemperatur liegt.

Als weitere in Fig. 2a dargestellte vorteilhafte zusätzliche Ausführungsform ist nach dem Ventilator 19 und vor dem Lufterhitzer 21 ein mittels Verbindungsleitung 46 mit dem Ventilator 19 verbundener Filterkasten 47 mit einem Filterschlauch 48 vorgesehen, welcher erlaubt, dass ein Luftmengendefizit im Kreislauf über den Filterschlauch 48 ausgeglichen werden kann, was sonst über Leckstellen geschehen muss.

Ebenfalls als Variante ist eine Umgehungsleitung 74 vorgesehen, welche ermöglicht, dass das Erwärmen des Speiseaggregates 2 und des Mischaggregates 3 umgangen wird. Ein Schieber 75 erlaubt das Oeffnen oder Schliessen dieser Umgehungsleitung 74. Es besteht aber auch die Möglichkeit, mit Hilfe dieses Schiebers 75, vorausgesetzt, dass dieser als Dosierschieber vorgesehen ist, nur einen Teil der Luft durch die Umgehungsleitung 74 fliessen zu lassen.

Vorteilhafterweise wird das Speiseaggregat 2 sowie das Mischaggregat 3 derart gebaut, dass ein Raum oberhalb der Mischschnecke resp. der Mischpaletten, vorgesehen wird, innerhalb welchem vorteilhafterweise die Warmluft mit einer Geschwindigkeit strömen kann, welche ein Verschieben der feinen Partikel in der Mischung möglichst vermeidet.

Letztlich sei erwähnt, dass alle erwärmten Elemente und Aggregate eine Wärmeisolation aufweisen, um einen Wärmeverlust im wesentlichen zu vermeiden.

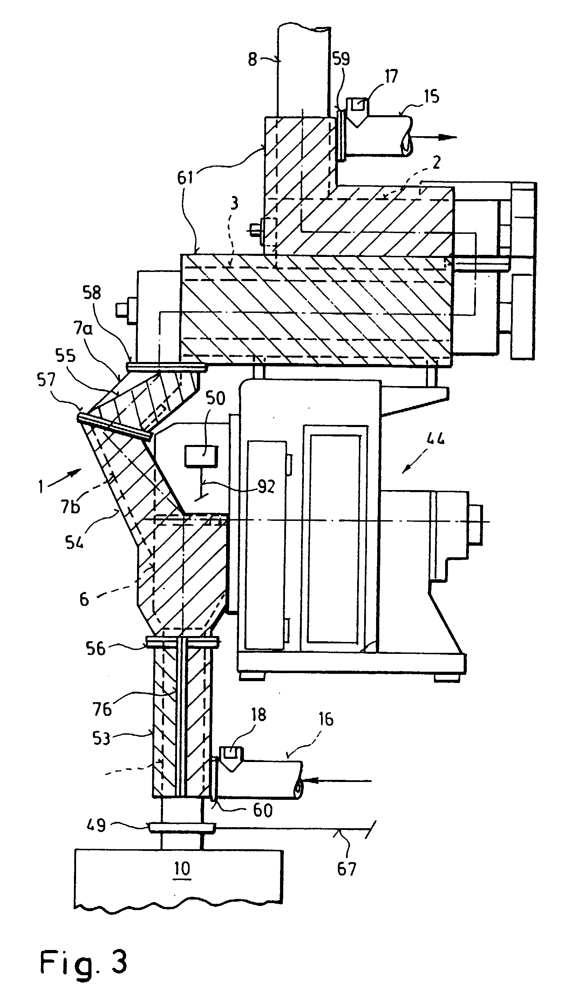

Die Fig. 3 zeigt insofern eine Variante zur Vorrichtung von Fig. 2, als in diesem Falle die zirkulierende Luft nicht innerhalb der Aggregate, sondern ausserhalb dieser in den entsprechend gestalteten, gegen Wärmeverlust isolierte Luftführungen geführt wird, welche es erlauben, dass die Warmluft die Aggregate von aussen nach innen erwärmen kann. Um die Erwärmung der Aggregate zu kontrollieren, können entweder Messelemente zur Messung einer Wandtemperatur und/oder die bereits beschriebenen Temperaturfühler 17 und 18 in den Luftanschlüssen 15 und 16 vorgesehen werden. Eine Wandtemperaturmessung ist beispielsweise mit dem Messelement 50 an der Gehäusewand des Gehäuses 6 vorgesehen. An welchen Stellen der Aggregate sinnvollerweise solche Messelemente 50 vorgesehen werden sollen, um eine sinnvolle Ueberwachung der Temperaturen der Aggregate zu erhalten, ist durch Versuche zu ermitteln. Die Messelemente sind mittels einer Steuerleitung 92 mit der in Fig. 2 gezeigten Steuerung 31 verbunden und die Temperatursignale können entweder für sich oder von den Temperatursignalen der Tempeaturfühler 17 und 18 überlagert werden.

Die vorgenannte Luftführung setzt sich aus folgenden Elementen zusammen: Der Produktausgangskanal 9 ist mit einer zweiteiligen Luftführung 53 versehen, welche mittels eines Anschlussflansches 56 an eine untere Luftführhaube 54 angeschlossen ist. Diese untere Luftführhaube 54 ist ihrerseits wieder mittels eines Anschlussflansches 57 an eine obere Luftführhaube 55 angeschlossen, die ihrerseits wieder mit einem Anschlussflansch 58 an eine oberste Luftführung 61 angeschlossen ist.

Die untere Luftführhaube 54 ist derart vorgesehen, dass sie in der in Figur 3 gezeigten Weise an das Gehäuse 6 bzw. an den unteren Teil 7b des Produkteinlaufkanales 7 anschliesst, dass die Warmluft im wesentlichen ohne Leckstellen durch diese Luftführhaube fliessen kann. Dasselbe gilt für die obere Luftführhaube 55, welche am oberen Teil 7a, mit Blick auf die Figur gesehen, des Produkteinlaufkanales 7 vorgesehen ist. Es ist gezeigt, dass weder das Gehäuse 6 noch der obere Teil des Produkteinlaufkanales 7 völlig durch die entsprechenden Hauben 54 und 55 abgedeckt sind und zwar ist dies deshalb vorgesehen, um im wesentlichen nur diejenigen Teile zu erwärmen, welche der Führung des Produktes dienen. Es liegt jedoch absolut im Rahmen des Erfindungsgedankens, das Gehäuse 6 und der Produkteinlaufkanal 7 vollständig mit entsprechenden Luftführhauben zu umschliessen.

Die oberste Luftführung 61 umschliesst im gleichen Sinne das Speiseaggregat 2 und das Mischaggregat 3, um die Luft primär am Mischaggregat 3 entlang und anschliessend am Speiseaggregat 2 entlangzuführen, um die Luft anschliessend in den oberen Luftanschluss 15 fliessen zu lassen. Der obere Luftanschluss 15 ist mittels eines Anschlussflansches 59 und der untere Luftanschluss 16 ist mittels eines Anschlussflansches 60 je mit den entsprechenden Luftanschlüssen 15 bzw. 16 verbunden.

Die Erwärmung der Luft geschieht in derselben Weise, wie mit Fig. 2 erklärt, weshalb hier auf diese Beschreibung verzichtet wird.

Ein Verbindungsflansch 76 ist beidseitig an der zweiteiligen Luftführung 53 vorgesehen (in Fig. 3 nur ein Flansch ersichtlich), um die beiden Luftführungshälften miteinander verbinden zu können. Dementsprechend muss derjenige Teil des Anschlussflansches 56, welcher mit den beiden Teilen der zweiteiligen Luftführung 53 verbunden ist, ebenfalls geteilt sein.

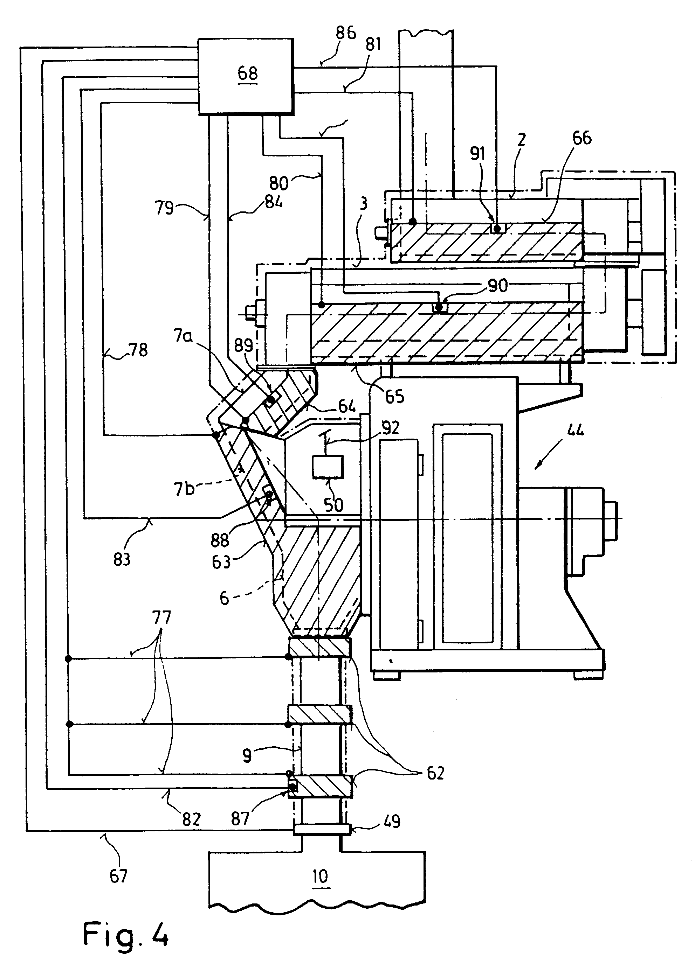

Die Fig. 4 zeigt im Vergleich zu den Mitteln zur Erwärmung der Aggregate der Fig. 3 insoferne eine Variante, als die Aggregate in dieser Figur nicht mittels Luft, sondern mittels Heizmatten erwärmt werden, die entsprechend der Form der Aggregate als Heizmanschetten oder Heizmäntel ausgebildet sind.

Beispielsweise ist der Produktausgangskanal 9 zwecks seiner Erwärmung mit Heizmanschetten 62 versehen, welche für die Energiezufuhr mit einer Steuerung 68 verbunden sind. Zur Kontrolle der Temperatur des Produktausgangskanales 9 ist nur eine der Manschetten 62 mit einem Temperaturmessfühler 87 versehen, welcher über eine Steuerleitung 82 mit der Steuerung 68 verbunden ist. Selbstverständlich besteht die Möglichkeit, alle drei Heizmanschetten 62 mit einem Temperaturmessfühler zu versehen, ebenfalls besteht die Möglichkeit, den Produktausgangskanal 9 mit einem Messelement 50 für Wandtemperaturen zu versehen, um eine direkte Temperaturmessung am Kanal 9 vorzunehmen, wobei die letztgenannten Messmöglichkeiten nicht dargestellt sind.

Zwischen und nach der letzten Heizmanschette 62 kann der Produktausgangskanal 9 isoliert sein, was mit strichpunktierten Linien dargestellt ist. Dasselbe gilt für alle nicht mit Heizmatten abgedeckten Teile.

Das Gehäuse 6 und der untere Teil 7b des Produkteinlaufkanales 7 ist mit einem unteren Heizmantel 63 versehen, der für die Energiezufuhr mit einer Verbindung 78 und für die Temperaturkontrolle mit einer Steuerleitung 83 mit der Steuerung 68 verbunden ist, wobei die Steuerleitung 83 das Temperatursignal eines im Heizmantel 63 vorgesehenen Temperaturmessfühlers 88 an die Steuerung 68 abgibt.

Der obere Teil 7a des Produkteinlaufkanales 7 ist - wie in Fig. 4 gezeigt - mit einem oberen Heizmantel 64 versehen, der für die Energiezufuhr über eine Verbindung 79 und für die Abgabe des Temperatursignales eines im Heizmantel 64 vorgesehenen Temperaturmessfühlers 89 über eine Steuerleitung 84 mit der Steuerung 68 verbunden ist.

Im weiteren ist das Mischaggregat 3 mit einem Heizmantel 65 und das Speiseaggregat 2 mit einem Heizmantel 66 versehen, wobei der Heizmantel 65 mit einer Energiezufuhrverbindung 80 und mit einer Temperatursignalverbindung 85, und der Heizmantel 66 für die Energiezufuhr mit einer Verbindung 81 und für die Abgabe des Temperatursignales mit einer Steuerleitung 86 mit der Steuerung 68, verbunden ist. Dabei gibt die Steuerleitung 85 das Temperatursignal eines im Heizmantel 66 vorgesehenen Temperaturmessfühlers 90 und die Steuerleitung 86, das Temperatursignal eines im Heizmantel 66 vorgesehenen Temperaturmessfühlers 91 an die vorgenannte Steuerung ab.

In Analogie zur Beschreibung der Fig. 3 können zusätzlich zu den erwähnten Temperaturmessfühler 87 bis 91 auch/oder die Messelemente zur Messung der Wandtemperaturen verwendet werden, welche mit den Steuerleitungen 92 mit der Steuerung 68 verbunden sind. Dabei können diese Temperatursignale für sich allein oder den Temperatursignalen den Temperaturmessfühlern 87 bis 91 überlagert werden.

Weitere Elemente der Figuren 2 und 3, welche in dieser Figur dieselbe Funktion haben, sind nicht weiter beschrieben und nur mit denselben Kennzeichen versehen.

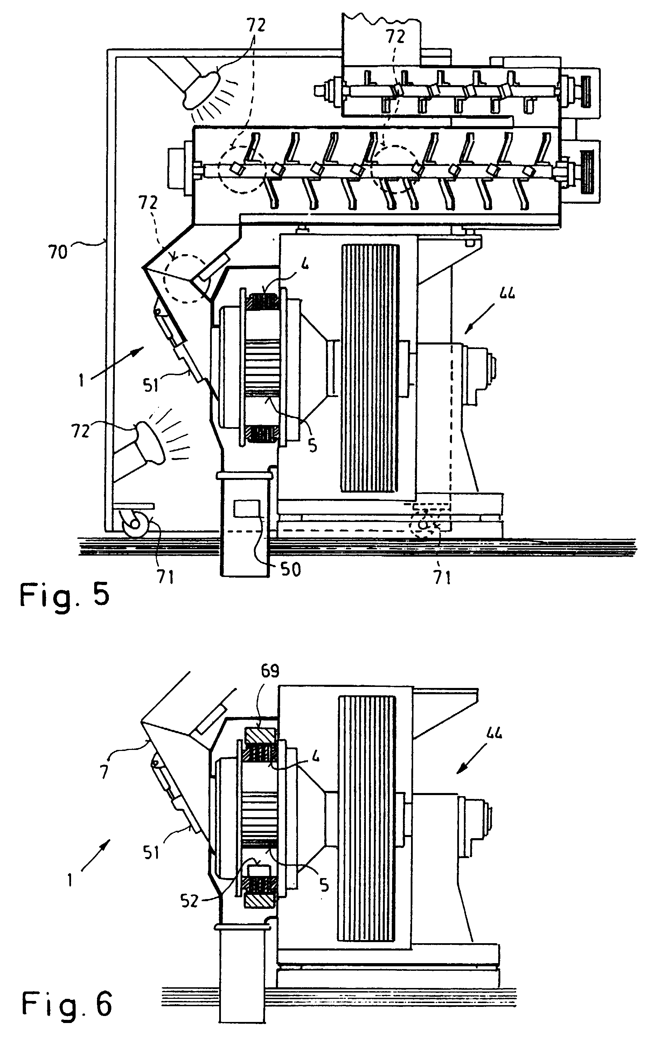

Die Fig. 5 zeigt eine weitere Variante einer Heizmöglichkeit der Vorrichtung, in dem zwei zusammenschiebbare Gehäuseteile 70 (in Fig. 5 nur eines gezeigt) mit Infrarotstrahlern 72 an geeigneten Stellen versehen sind, um die zur Vorrichtung gehörenden Aggregate mit Infrarotwärme zu erwärmen.

Zur Kontrolle der Temperatur können an ebenfalls geeigneten Stellen Messelemente 50 für die Wandtemperatur vorgesehen werden, wobei die geeigneten Stellen für die Infrarotstrahler 72 und für die Messelemente 50 durch Versuche festgestellt werden müssen.

Die Gehäuseteile 70 sind vorteilhafterweise mit Schwenkrollen 71 versehen, so dass die beiden Gehäuseteile fahrbar gegeneinander und um die Aggregate herum gebracht werden können.

Es versteht sich, dass auch für diese Variante eine hier nicht gezeigte Temperatursteuerung vorgesehen werden muss, die jedoch in ähnlicher Weise funktioniert, wie die früher beschriebene.

Weiter zeigt die Fig. 6 die Möglichkeit der Erwärmung der Pressform selbst, in dem diese Form mit einer Heizmanschette 69 versehen ist, und die Temperatur der Form mittels einem anbringbaren Temperaturmesselement 52 gemessen wird. Die Ueberwachung und Steuerung der Temperatur muss in analoger Weise wie für Fig. 5 bzw. wie für die Figuren 2 und 3 bzw. 4 geschehen.

Letztlich zeigt die Fig. 7 halbschematisch eine Kombination des Speiseaggregates 2 mit anschliessendem Mischaggregat 3 sowie zwischen Mischaggregat 3 und dem Produkteinlaufkanal 7 für die Würfelpresse 1 noch einen Expander 99, welcher an sich aus der europäischen Patentveröffentlichung EP 0 428 978 A1 bekannt ist, weshalb dieser nicht näher beschrieben wird.

Die Erwärmung des Expanders kann gleich wie je für die Figuren 2, 3 und 4 bzw. 5 gezeigt erfolgen, was in dieser Figur nicht ausdrücklich dargestellt ist.

Hingegen ist gezeigt, dass mit Hilfe einer Auslassklappe 98 - analog einer Notklappe 51 der Figuren 5 und 6 - das vom Expander herkommende Produkt, statt in die Pressform der Würfelpresse 1 zu leiten, in ein Bypassrohr 101 geführt wird, in welchem es beispielsweise dem früher erwähnten Kühler 10 zugeführt wird.

Die Klappe 98 wird mittels einer einfach wirkenden Zylinder-Kolben-Einheit 96 betrieben, welche mittels einer Steuerleitung 94 je nach Art der Mittel zum Erwärmen der Elemente mit der Steuerung 31 oder 68 verbunden ist.

Es besteht aber auch die Möglichkeit, das vom Expander 99 herstammende Produkt durch ein Messelement für Produkttemperatur 49.1 zu messen und falls das Produkt eine Temperatur aufweist, welche tiefer ist als ein vorgegebener Toleranzbereich für diese Temperatur, die Klappe 98 ebenfalls geöffnet wird, wobei das Produkt dann nicht in den Kühler 10, sondern, wie Pfeil 102 andeutet, in irgendeine Ablage geführt wird, aus welcher das Produkt gegebenenfalls neu über die gleiche Anlage geführt werden kann. Das Messelement für Produkttemperatur 49.1 gibt das Temperatursignal mittels einer Steuerleitung 67.1, je nach Art der Mittel zum Erwärmen der Elemente, an die Steuerung 31 oder 68, ab.

Nach der Würfelpresse 1 ist - wie bereits mit den Figuren 2, 3 und 4 gezeigt - das Messelement für Produkttemperatur 49 vorgesehen, welches das Temperatursignal mittels der Steuerleitung 67 in die entsprechende Steuerung leitet, wobei neu in dieser Figur ist, dass eine Klappe 97 vorgesehen ist, die in die gestrichelte Position gebracht wird, wenn die Temperatur des Produktes nach der Würfelpresse 1 tiefer als ein Toleranzbereich für eine vorgegebene Temperatur ist. Solches Produkt geht analog dem Produkt in Richtung 102 über ein Bypassrohr 100 in eine Ablage, aus welcher das Produkt wieder beigemischt werden kann.

Die Klappe 97 wird mittels einer einfach wirkenden Zylinder-Kolben-Einheit 95 betätigt, die das Steuersignal über die Steuerleitung 93 von der entsprechenden Steuerung 31 oder 68 erhält.

Die weiteren, den Figuren 2 bis 4 entsprechenden Elemente, welche hier dieselbe Funktion haben, sind nicht weiter gekennzeichnet und beschrieben.

### Legende

- 1: Würfelpresse
- 2: Speiseaggregat
- 3: Mischaggregat
- 4: Pressform
- 5: Pressrollen
- 6: Gehäuse
- 7: Produkteinlaufkanal
- 7a: oberer Teil
- 7b: unterer Teil
- 8: Produktzufuhrkanal
- 9: Produktausgangskanal
- 10: Kühler
- 11: Einlaufschieber
- 12: Auslaufschieber
- 13: Luftaustrittskanal
- 14: Lufteintrittskanal
- 15: oberer Luftanschluss
- 16: unterer Luftanschluss
- 17: oberer Temperaturfühler
- 18: unterer Temperaturfühler
- 19: isolierter Ventilator
- 20: Verbindungsleitung
- 21: Lufterhitzer
- 22: Einlauf für Heizmedium
- 23: Auslauf für Heizmedium
- 24: Steuerventil für Heizmedium
- 25: Zufuhrleitung für Heizmedium
- 26: Abgangsleitung für Heizmedium
- 27/28/ 29/30: Steuerleitung
- 31: Steuerung
- 32/33: doppelt wirkende Zylinder-Kolben-Einheit
- 34/35: Umschaltventil
- 36/37: Verbindungsleitung
- 38/39: Abluft
- 40/41: Druckluftzufuhr
- 44: Pressenständer
- 45: Temperatursignal
- 46: Verbindungsleitung
- 47: Filterkasten
- 48: Filterschlauch
- 49: Messelement für Produkttemperatur
- 49.1: do.
- 50: Messelement für Wandtemperatur
- 51: Notklappe
- 52: anbringbares Temperaturmesselement
- 53: zweiteilige Luftführung
- 54: untere Luftführhaube
- 55: obere Luftführhaube
- 56-60: Anschlussflansch
- 61: oberste Luftführung
- 62: Heizmanschette
- 63: unterer Heizmantel
- 64: oberer Heizmantel
- 65: Heizmantel für Mischaggregat und/oder Expander
- 66: Heizmantel für Speiseaggregat
- 67/67.1: Steuerleitung
- 68: Steuerung
- 69: Heizmanschette für Pressform
- 70: Gehäuseteil
- 71: Schwenkrollen
- 72: Infrarotstrahler
- 74: Umgehungsleitung
- 75: Schieber
- 76: Verbindungsflansch
- 77-81: Verbindung
- 82-86: Steuerleitung
- 87-91: Temperaturmessfühler
- 92-94: Steuerleitung
- 95/96: einfach wirkende Zylinder-Kolben-Einheit
- 97/98: Auslassklappe
- 99: Expander
- 100/101: Bypassrohr
- 102: Pfeil

## Patentansprüche

1. Verfahren zur Eliminierung von Bakterien und anderen Keimen in einem Futtermittel mittels einer Würfelpress-(1) und/oder Expanderanlage mit einem Produkteinlauf- und Produktzufuhrkanal (7, 8) mit einem Speise- (2) und Mischaggregat (3), mit einer Pressform (4) und mit einem Produktausgangskanal (9), dadurch gekennzeichnet, dass produktführende Aggregate und Teile, nämlich das Mischaggregat (3) sowie bedarfsweise angrenzende Bereiche des Speiseaggregates (2) bzw. des Speiseeinlaufkanales (8), der Produkteinlaufkanal (7, 7a, 7b), die Pressform (4), und der Produktausgangskanal (9), ohne räumliche Unterbrechung der Wärmeführung auf dem radialem Umfang und Verlauf dieser Aggregate und Teile und/oder ununterbrochen entlang des Verlaufs derselben mittels dampffreier Heizmittel erwärmt werden.

2. Verfahren nach Anspruch 1, dadurch gekennzeichnet, dass der Produktzuführkanal (8) und das Speiseaggregat (2) miterwärmt werden.

3. Verfahren nach den Ansprüchen 1 oder 2, dadurch gekennzeichnet, dass die Erwärmung der Aggregate (8, 2, 3, 7, 4, 9) mittels Heissluft, Heizmatten, und/oder mittels Infrarotstrahler erfolgt.

4. Verfahren nach den Ansprüchen 1, 2 oder 3, dadurch gekennzeichnet, dass die Produkttemperatur gesteuert und geregelt wird.

5. Verfahren nach mindestens einem der Ansprüche 1 bis 4, dadurch gekennzeichnet, dass die Temperatur des zu behandelnden Produktes gemessen wird und dasjenige Produkt ausgeschieden wird, welches eine vorgegebene Temperatur unterschreitet.

6. Vorrichtung bestehend aus einer Würfelpresse (1) und/oder einer Expanderanlage mit einem Produkteinlauf- und Produktzufuhrkanal (7, 8) mit einem Speise- (2) und Mischaggregat (3), mit einer Pressform (4) und mit einem Produktausgangskanal (9) zur Durchführung des Verfahrens nach den Ansprüchen 1 bis 5, dadurch gekennzeichnet, dass zur Erwärmung der produktführenden Aggregate und Teile (8, 2, 3, 4, 7, 9) ein Luftkreislauf (19, 20, 21, 16, 14, 13, 15) mit einem Ventilator (19), einer Verbindungsleitung (20), einem Lufterhitzer (21), einem, seitlich am Produktausgangskanal (9) angeordneten unteren Luftanschluss (16) mit einem Lufteintrittskanal (14), einem Luftaustrittskanal(13) mit einem, seitlich am Produktzufuhrkanal (8) angeordneten oberen Luftanschluss (15) vorgesehen ist, wobei die Luftführung vom Produktausgangskanal (9) über die Pressform (4) den Produktzufuhrkanal (7), das Speise- und Mischaggregat (2, 3) zum Produkteinlaufkanal (8) erfolgt.

7. Vorrichtung nach Anspruch 6, dadurch gekennzeichnet, dass der Lufterhitzer (21) einen Einlauf (22) und einen Auslauf (23) für das Heizmedium zur Erwärmung der Luft für den Luftkreislauf aufweist.

8. Vorrichtung nach den Ansprüchen 6 oder 7, dadurch gekennzeichnet, dass zur Steuerung und Regelung der Temperatur der Kreislaufluft eine Steuerung (31) mit mindestens zwei Temperaturfühlern (17, 18), ein dem Lufterhitzer (21) zugeordnetes Steuerventil (24) zur Steuerung des Heizmediums und Steuer- und Messleitungen (27, 28, 45) vorgesehen sind.

9. Vorrichtung nach mindestens einem der Ansprüche 6 bis 8, dadurch gekennzeichnet, dass zusätzliche Mittel vorgesehen sind, um die Temperatur des Ausgangsproduktes zu messen und Mittel, um dasjenige Produkt auszuscheiden, welches die vorgegebene Temperatur nicht erreicht hat.

10. Vorrichtung nach Anspruch 6, dadurch gekennzeichnet, dass das Mischaggregat (3) ein Konditioneur ist.

11. Vorrichtung nach Anspruch 6 oder 10, dadurch gekennzeichnet, dass zwischen dem Mischaggregat (3) und dem Produkteinlaufkanal (7) ein Expander (99) angeordnet ist.

12. Vorrichtung zur Herstellung von Futterwürfeln oder ähnlichen Produkten mittels einer Würfelpress- und/oder Expanderanlage mit einem Produktzuführkanal (7, 8), mit einem Speise- (2) und Mischaggregat (3) mit einer Pressform (4) und einem Produktausgangskanal (9), wobei mindestens ein Teil dieser Elemente zwecks Eliminierung von Bakterien und anderen Keimen erwärmt werden, dadurch gekennzeichnet, dass die produktführenden Teilen des Mischaggregates (3), des Produkteinlaufkanals (7), der Pressform (4), des Produktausgangskanals (9) sowie bedarfsweise des Speiseaggregates (2) und des Produkteinlaufkanals (8) mit Heizmatten in Form von Heizmanschetten (62) bzw. Heizmantel (63, 64, 65, 66) versehen sind, wobei zur Regelung der Temperatur eine Steuerung (31) vorgesehen ist.

## Claims

1. Process for eliminating bacteria and other germs in a feeding stuff by means of a cube compression (1) and/or expansion plant with a product inlet and product supply duct (7, 8) with a feed (2) and mixing unit (3), with a compression mould (4) and with a product outlet duct (9), characterised in that product guiding units and parts, namely the mixing unit (3) and, if necessary, adjacent regions of the feed unit (2) or of the feed inlet duct (8), the product supply duct (7, 7a, 7b), the compression mould (4), and the product outlet duct (9) are heated by steam-free heating means without spatial interruption of the heat guidance on the radial circumference and course of these units and parts and/or uninterruptedly along the course thereof.

2. Process according to claim 1, characterised in that the product supply duct (8) and the feed unit (2) are also heated.

3. Process according to claims 1 or 2, characterised in that the heating of the units (8, 2, 3, 7, 4, 9) is by hot air, heating mats, and/or by infrared lamps.

4. Process according to claims 1, 2 or 3, characterised in that the product temperature is controlled and regulated.

5. Process according to at least one of claims 1 to 4, characterised in that the temperature of the product to be treated is measured and that product which falls below a predetermined temperature is eliminated.

6. Device consisting of a cube press (1) and/or an expansion plant with a product inlet and a product supply duct (7, 8) with a feed (2) and mixing unit (3), with a compression mould (4) and with a product outlet duct (9) for carrying out the process according to claims 1 to 5, characterised in that an air circuit (19, 20, 21, 16, 14, 13, 15) with a fan (19), a connecting line (20), an air heater (21), a lower air connection (16) arranged laterally on the product outlet duct (9) with an air inlet duct (14) and an air outlet duct (13) with an upper air connection (15) arranged laterally on the product supply duct (8) is provided for heating the product-guiding units and parts (8, 2, 3, 4, 7, 9), the air being guided from the product outlet duct (9) via the compression mould (4), the product supply duct (7), the feed and mixing unit (2, 3) to the product inlet duct (8).

7. Device according to claim 6, characterised in that the air heater (21) comprises an inlet (22) and an outlet (23) for the heating medium for heating the air for the air circuit.

8. Device according to claim 6 or 7, characterised in that a controller (31) with at least two temperature sensors (17, 18), a control valve (24) associated with the air heater (21) and for controlling the heating medium, and control and measurement lines (27, 28, 45) are provided for controlling and regulating the temperature of the air circuit.

9. Device according to at least one of claims 6 to 8, characterised in that additional means are provided for measuring the temperature of the output product and for eliminating that product which has not yet reached the predetermined temperature.

10. Device according to claim 6, characterised in that the mixing unit (3) is a conditioner.

11. Device according to claim 6 or 10, characterised in that an expander (99) is arranged between the mixing unit (3) and the product inlet duct (7).

12. Device for producing feeding stuff cubes or similar products with a cube compression and/or expansion plant with a product supply duct (7, 8), with a feed (2) and mixing unit (3) with a compression mould (4) and a product outlet duct (9), at least some of these elements being warmed for eliminating bacteria and other germs, characterised in that the product-guiding parts of the mixing unit (3), the product inlet duct (7), the compression mould (4), the product outlet duct (9) and, if necessary, the feed unit (2) and the product inlet duct (8) are provided with heating mats in the form of heating sleeves (62) or heating jackets (63, 64, 65, 66), a controller (31) being provided for regulating the temperature.

## Revendications

1. Procédé d'élimination de bactéries et autres germes dans des aliments pour animaux au moyen d'un dispositif de presse à granuler (1) et/ou dispositif de détente comprenant un conduit d'entrée de produit et un conduit d'acheminement de produit (7, 8), un ensemble d'alimentation (2) et un ensemble de mélange (3), une filière d'extrusion (4) et un conduit de sortie de produit (9), caractérisé en ce que des ensembles et parties servant au passage de produit, à savoir l'ensemble de mélange (3) et, en cas de besoin, des zones adjacentes de l'ensemble d'alimentation (2) ou du conduit d'entrée d'alimentation (8), le conduit d'entrée de produit (7, 7a, 7b), la filière d'extrusion (4) et le conduit de sortie de produit (9) sont chauffés à l'aide de moyens chauffants sans vapeur, sans interruption dans l'espace du passage de chaleur à partir de la périphérie radiale et du tracé de ces ensembles et parties et/ou d'une manière ininterrompue le long du tracé de ceux-ci.

2. Procédé suivant la revendication 1, caractérisé en ce que le conduit d'acheminement de produit (8) et l'ensemble d'alimentation (2) sont chauffés simultanément.

3. Procédé suivant les revendications 1 ou 2, caractérisé en ce que le chauffage des ensembles (8, 2, 3, 7, 4, 9) a lieu au moyen d'air chaud, de mats chauffants et/ou au moyen de radiateurs à infrarouge.

4. Procédé suivant les revendications 1, 2 ou 3, caractérisé en ce que la température du produit est l'objet d'une commande et d'une régulation.

5. Procédé suivant au moins l'une des revendications 1 à 4, caractérisé en ce que la température du produit à traiter est mesurée et le produit qui se trouve au-dessous d'une température préfixée est séparé.

6. Dispositif constitué d'une presse à granuler (1) et/ou d'un dispositif de détente comprenant un conduit d'entrée de produit et un conduit d'acheminement de produit (7, 8), un ensemble d'alimentation (2) et un ensemble de mélange (3), une filière d'extrusion (4) et un conduit de sortie de produit (9) pour la mise en oeuvre du procédé suivant les revendications 1 à 5, caractérisé en ce que, pour le chauffage des ensembles et parties de passage de produit (8, 2, 3, 4, 7, 9), il est prévu un circuit d'air (19, 20, 21, 16, 14, 13, 15) comprenant un ventilateur (19), une tuyauterie de liaison (20), un réchauffeur d'air (21), un raccordement d'air (16) inférieur disposé latéralement sur le conduit de sortie de produit (9), un conduit d'entrée d'air (14), un conduit de sortie d'air (13) et un raccordement d'air (15) supérieur disposé latéralement sur le conduit d'acheminement de produit (8), le passage d'air ayant lieu du conduit de sortie de produit (9) vers le conduit d'entrée de produit (8) en passant par la filière d'extrusion (4), le conduit d'acheminement de produit (7), l'ensemble d'alimentation et l'ensemble de mélange (2, 3).

7. Dispositif suivant la revendication 6, caractérisé en ce que le réchauffeur d'air (21) comporte une entrée (22) et une sortie (23) pour l'agent chauffant servant au chauffage de l'air destiné au circuit d'air.

8. Dispositif suivant les revendications 6 ou 7, caractérisé en ce que, pour la commande et la régulation de la température de l'air de circuit, il est prévu une commande (31) comportant au moins deux sondes de température (17, 18), une valve de commande (24) associée au réchauffeur d'air (21) et servant à commander l'agent chauffant et des lignes de commande et de mesure (27, 28, 45).

9. Dispositif suivant au moins l'une des revendications 6 à 8, caractérisé en ce qu'il est prévu des moyens supplémentaires pour mesurer la température du produit de sortie et des moyens pour séparer le produit qui n'a pas atteint la température préfixée.

10. Dispositif suivant la revendication 6, caractérisé en ce que l'ensemble de mélange (3) est un conditionneur.

11. Dispositif suivant la revendication 6 ou 10, caractérisé en ce qu'un dispositif de détente (99) est disposé entre l'ensemble de mélange (3) et le conduit d'entrée de produit (7).

12. Dispositif d'élaboration de granulés d'aliments pour animaux et produits analogues au moyen d'un dispositif de presse à granuler et/ou un dispositif de détente comprenant un conduit d'acheminement de produit (7, 8), un ensemble d'alimentation (2) et un ensemble de mélange (3), une filière d'extrusion (4) et un conduit de sortie de produit (9), au moins une partie de ces éléments étant chauffés en vue de l'élimination de bactéries et autres germes, caractérisé en ce que les parties de passage de produit de l'ensemble de mélange (3), du conduit d'entrée de produit (7), de la filière d'extrusion (4), du conduit de sortie de produit (9) et, en cas de besoin, de l'ensemble d'alimentation (2) et du conduit d'entrée de produit (8) sont pourvus de mats chauffants se présentant sous forme de manchons chauffants (62) ou d'enveloppes chauffantes (63, 64, 65, 66), une commande (31) étant prévue pour la régulation de la température.
